# EUROPÄISCHE PATENTSCHRIFT

(11) **EP 2 679 869 B1**
(45) Veröffentlichungstag und Bekanntmachung des Hinweises auf die Patenterteilung: **17.10.2018**
(21) Anmeldenummer: 13405074.9
(22) Anmeldetag: 24.06.2013
(51) Int. Cl.: F16K 31/46, E03B 9/14, F16K 27/00

(54) **Hauptventil für einen Hydranten**
Main valve for a hydrant
Soupape principale pour une prise d'eau

(30) Priorität: 28.06.2012 CH 9142012
(43) Veröffentlichungstag der Anmeldung: 01.01.2014
(73) Patentinhaber: Hinni AG, 4105 Biel-Benken (CH)
(72) Erfinder: Jermann, Dieter, CH-4242 Laufen (CH)
(74) Vertreter: Ullrich, Gerhard

(56) Entgegenhaltungen:
- EP-A2- 1 347 104
- AT-A1- 505 317
- DE-A1- 2 803 189
- DE-A1- 3 031 520
- FR-A1- 2 773 373
- US-A- 5 752 542
- US-A1- 2008 135 100

## Beschreibung

Die Erfindung betrifft einen Hydranten mit einem Hauptventil, der zur Installation in einem Wasserleitungsnetz bestimmt ist. Am Hydranten ist zumindest ein zur Wasserentnahme dienender Anschluss vorhanden. Im Steigrohr des Hydranten erstreckt sich eine betätigbare Ventilstange, die mit dem Hauptventil verbunden ist und mittels derer das Hauptventil zwischen einer Schliessstellung und einer zur Wasserentnahme bedingten Offenstellung einstellbar ist. Der Hydrant hat einen Ventilsitz und einen zum Zusammenwirken mit dem Ventilsitz bestimmten Verschlusskörper, der Bestandteil des Hauptventils ist. Ferner weist der Hydrant eine Entwässerungsöffnung auf, welche bei Nichtgebrauch des Hydranten zur selbsttätigen Entleerung des im Hydranten verbliebenen Wassers vorgesehen ist.

### Stand der Technik

Hydranten sowohl in Gestalt von Unterflur- als auch von Überflurhydranten, die direkten Anschluss mit dem unterirdischen Wasserleitungsnetz haben, sind grundsätzlich nur zur Wasserentnahme vorgesehen, insbesondere für Löscharbeiten der Feuerwehr. In Ausnahmefällen werden von der Wasserwirtschaft zwei in Distanz zueinander installierte Hydranten genutzt, um bei Baumassnahmen oder Leitungsbruch die dazwischen liegende Strecke des Wasserleitungsnetzes abzusperren und zu überbrücken und so die Versorgung aufrecht zu erhalten. Hierzu kann man am ersten Hydranten Wasser in eine zumeist überirdisch temporär verlegte Behelfsleitung einleiten und von dieser das Wasser über den zweiten Hydranten in das dahinter liegende reguläre Leitungsnetz wieder einspeisen. Nur für derartige Situationen bedarf es der Möglichkeit, über einen Hydranten Frischwasser in Lebensmittelqualität in das Wasserleitungsnetz einzuspeisen. Damit verbleibt jedoch ein Restrisiko, dass versehentlich oder von unbefugten Personen in übler Absicht Schmutzwasser oder andere Medien über Hydranten in das Wasserleitungsnetz eingebracht werden könnten.

In der US 2008/0135100 A1 ist für Hydranten eine nachrüstbare Baugruppe zur Verhinderung des Einbringens von Fremdstoffen in das Wasserleitungsnetz offenbart. Die Baugruppe umfasst ein oberhalb des Hauptventils im Steigrohr angeordnetes federgelagertes Zusatzventil, das sich bei Wasserentnahme durch den Strömungsdruck vom Dichtungssitz abhebt. Beim Einbringen von Fremdstoffen über den Schlauchanschluss sperrt das Zusatzventil das Einströmen der Fremdstoffe in Richtung Hauptventil und weiter zum Wasserleitungsnetz. Die auf das Zusatzventil wirkende Feder stützt sich an der Ventilstange ab und ist auf dieser geführt. In den Hydranten versehentlich oder bösartig eingebrachte Fremdstoffe werden in einem Bauchraum gesammelt und können von dort über ein Auslassventil abgelassen oder von über das Hauptventil zuströmende Wasser ausgespült werden.

Die EP 1 347 104 A2 hat ein Wasserauslassventil zum Einbau in einer Hauswand mit einem Netzanschluss, einem Auslass und einem Betätigungselement zum Gegenstand. Das Betätigungselement ist mit einem axial verschiebbaren Basiskörper verbunden, an dem sich eine Feder abstützt, die andererseits einen Verschlusskörper trägt, welcher den Ventilsitz absperrt. Bei geschlossenem Ventil ist die Feder zusammengedrückt und der Basiskörper presst den Verschlusskörper auf den Ventilsitz. Bei geöffnetem Ventil ist der Basiskörper zurückgefahren, durch die sich ausdehnende Feder wird der Verschlusskörper auf den Ventilsitz gedrückt, und bei Wasserentnahme hebt sich infolge des Strömungsdrucks der Verschlusskörper vom Ventilsitz. Gelangen bei geöffnetem Ventil rückfliessendes Wasser oder Schadstoffe in das Ventil, bewirkt der auf dem Ventilsitz ruhende Verschlusskörper eine Absperrung und verhindert damit das Einströmen in das Wasserleitungsnetz. Ferner ist das Ventil mit einer automatischen Entleerung ausgestattet, welche bei geschlossenem Ventil zur Wirkung kommt.

Die FR 2 773 373 A1 betrifft einen Unterflurhydranten mit Rückflussverhinderer. Beim Aufdrehen der Ventilstange öffnet sich ein oberer Ventilsitz und ein darunter angeordneter federgelagerter hülsenförmiger Verschlusskörper wird vom Hauptventilsitz aufwärts abgehoben, dass das Hauptventil geöffnet ist. Ohne Wasserentnahme zieht eine zweite Feder ein an einem Stössel hängendes Zusatzventil auf einen zweiten Ventilsitz und bewirkt damit eine Absperrung gegen das Einströmen von von ausserhalb in den Hydranten eingebrachtem Medium in das Wasserleitungsnetz. Bei Wasserentnahme wird vom Strömungsdruck gegen die Kraft der zweiten Feder das Zusatzventil vom zweiten Ventilsitz abgehoben und der Wasserdurchfluss möglich. Bei geschlossenem Hauptventil ist der obere Ventilsitz geschlossen und dadurch der Verschlusskörper gegen die Kraft der ersten Feder auf den Hauptventilsitz gedrückt. Zugleich zieht die zweite Feder das Zusatzventil auf den zweiten Ventilsitz und bewirkt damit zum geschlossenen Hauptventil eine zusätzliche Absperrung gegen das Einströmen von von ausserhalb in den Hydranten eingebrachtem Medium in das Wasserleitungsnetz.

Aus der DE 30 31 520 A1 ist ein Hydrant mit einem Standrohranschluss und einer im Mantelrohr angeordneten höhenverstellbaren Ventilstange bekannt. Das Hauptventil wird von Ventilkörper und Ventilsitz gebildet. Zwischen Mantelrohr und Wasserleitung ist ein bauchiges Ventilgehäuse installiert, in dem sich eine Schwimmerkugel befindet. Bei offenem Hauptventil ist der Ventilkörper abwärts, entfernt vom Ventilsitz, in das Ventilgehäuse eingefahren und ein Federgestänge drückt die Schwimmerkugel weg vom oberen Dichtungssitz, so dass Wasserdurchfluss stattfindet. Ist das Hauptventil in Offenstellung und es findet keine Wasserentnahme aus dem Standrohranschluss statt, drückt das Federgestänge die Schwimmerkugel auf einen unteren Dichtungssitz, welche dann als Rückflussverhinderer wirkt. Wird der Wasserdurchfluss wieder freigegeben, hebt der Wasserdruck die Schwimmerkugel vom unteren Dichtungssitz gegen die Kraft des Federgestänges ab.

### Aufgabe der Erfindung

Angesichts des oben geschilderten problematischen Restrisikos liegt der Erfindung die Aufgabe zugrunde, die Sicherheit an Hydranten zu erhöhen, um das versehentliche oder von Unbefugten vorgenommene Einspeisen von Medien, wie Schmutzwasser oder die Gesundheit gefährdenden Stoffen, über Hydranten in das Wasserleitungsnetz auszuschliessen, ohne dabei die angestammten Funktionen des Hydranten zu beeinträchtigen.

### Übersicht über die Erfindung

Der erfindungsgemässe Hydrant mit seinem Hauptventil ist zur Installation in einem Wasserleitungsnetz bestimmt. Am Hydranten ist zumindest ein zur Wasserentnahme dienender Anschluss vorhanden. Der Hydrant hat ein Steigrohr und eine darin sich erstreckende betätigbare Ventilstange, die mit dem Hauptventil verbunden ist und mittels derer das Hauptventil zwischen einer Schliessstellung und einer zur Wasserentnahme bedingten Offenstellung einstellbar ist. Im Hydranten befindet sich ein Ventilsitz und ein zum Zusammenwirken mit dem Ventilsitz bestimmter Verschlusskörper, der Bestandteil des Hauptventils ist. Ferner hat der Hydrant eine Entwässerungsöffnung, welche bei Nichtgebrauch des Hydranten zur selbsttätigen Entleerung des im Hydranten verbliebenen Wassers vorgesehen ist. Das Hauptventil weist Mittel zur Verhinderung des Einbringens von Medium durch den Ventilsitz in das Wasserleitungsnetz über den Hydranten bei einer zur Wasserentnahme Offenstellung des Hauptventils und bei fehlendem Durchfluss aus dem Wasserleitungsnetz durch den Hydranten auf.

Die Mittel am Hauptventil umfassen:
a) eine Basis, die fest mit der Ventilstange verbunden ist; und
b) den Verschlusskörper, welcher dem Ventilsitz zugewandt auf einer Feder gelagert mit der Basis verbunden ist, wobei:
c) in der Schliessstellung des Hauptventils der Verschlusskörper mit seiner Hauptdichtung auf dem Ventilsitz, diesen abdichtend, aufsitzt und die Basis gegen die Kraft der Feder an den Verschlusskörper gefahren ist;
d) in der Offenstellung des Hauptventils und bei fehlendem Durchfluss aus dem Wasserleitungsnetz durch den Hydranten aus dem Anschluss heraus die Basis aufwärts gefahren ist und der Verschlusskörper mit seiner Hauptdichtung von der Kraft der Feder auf den Ventilsitz abdichtend aufgepresst ist;
e) in der Offenstellung des Hauptventils und bei vorhandenem Durchfluss aus dem Wasserleitungsnetz durch den Hydranten aus dem Anschluss heraus die Basis aufwärts gefahren verharrt und der Verschlusskörper mit seiner Hauptdichtung gegen die Kraft der Feder vom Druck des Durchflusses, nämlich vom dabei auftretenden Differenzdruck in der Strömung, vom Ventilsitz weggedrückt ist; und
f) in der Offenstellung des Hauptventils und bei versuchter Einleitung von Medium über den Hydranten in das Wasserleitungsnetz die Basis aufwärts gefahren ist und der Verschlusskörper mit seiner Hauptdichtung von der Kraft der Feder und vom Druck des anstehenden Mediums auf den Ventilsitz abdichtend aufgepresst ist, wodurch das Einbringen von Medium in das Wasserleitungsnetz blockiert ist.

Nachstehend sind besonders vorteilhafte Details zur Erfindung genannt.

Die Basis ist mit einem Dichtungselement versehen, wobei:
a) in der Offenstellung des Hauptventils sich das Dichtungselement in einer Position befindet, um die Entwässerungsöffnung am Hydranten zu versperren; und
b) in der Schliessstellung des Hauptventils sich das Dichtungselement in einer Position befindet, um die Entwässerungsöffnung am Hydranten für eine selbsttätige Entleerung des im Hydranten verbliebenen Wassers frei zu geben.

Am Hauptventil sind lösbare Arretiermittel zur Blockierung einer Relativbewegung zwischen der Basis und dem Verschlusskörper mit seiner Hauptdichtung vorhanden.

### Spezielle Merkmale einer ersten Variante des Hydranten mit seinem Hauptventil

Der Verschlusskörper besitzt unten einen Teller, von dem sich zentrisch ein senkrechter Zapfen erhebt, der verschiebbar in einen Axialdurchgang der Basis hineinragt. Die Feder wirkt auf ein freies oberes Ende des Zapfens ein. Die Feder ist in einer Hülse untergebracht und stützt sich darin an einer Dachwandung ab. Die Basis besitzt unten einen Boden, von dem sich zentrisch ein senkrechter Stutzen erhebt, in dem ein unteres Ende der Hülse und ein unteres Ende der Ventilstange fixiert sind. Die Hülse erstreckt sich aufwärts in die Ventilstange.

Die lösbaren Arretiermittel zur Blockierung der Relativbewegung zwischen Basis und Verschlusskörper bestehen aus:
a) zumindest einem vom Teller des Verschlusskörpers aufragenden Bolzen, der ein Durchgangsloch im Boden der Basis durchragt; und
b) einem Sicherungselement, das lösbar auf einem freien Ende des Bolzens angebracht ist und somit auf einer Deckfläche des Bodens aufsitzt, so dass im blockierten Zustand Basis und Verschlusskörper gegen die Kraft der Feder zusammengedrängt sind, wobei:
c) Bolzen, Durchgangsloch und Sicherungselement vorzugsweise zweifach zueinander diametral angeordnet vorgesehen sind.

### Spezielle Merkmale einer zweiten Variante des Hydranten mit seinem Hauptventil

Der Verschlusskörper besitzt unten einen Teller, von dem sich zentrisch ein senkrechter Zapfen erhebt, der verschiebbar in einen Axialdurchgang der Basis hineinragt. Die Feder ist um den Zapfen angeordnet und wirkt auf den Teller ein. Die Basis besitzt unten einen Boden, von dem sich zentrisch ein senkrechter Stutzen erhebt, mit dem ein unteres Ende der Ventilstange verbunden ist. Die Feder stützt sich an einer internen Ringschulter im Axialdurchgang des Stutzens der Basis ab.

Die lösbaren Arretiermittel zur Blockierung der Relativbewegung zwischen Basis und Verschlusskörper bestehen aus:
a) einem Führungselement, das an einem freien oberen Ende des Zapfens angeordnet ist;
b) einem Hülsenstück mit einem Axialdurchgang, in den der Zapfen des Verschlusskörpers hineinragt, wobei das Hülsenstück:
   ba) zumindest eine axial verlaufende Führungsnut zur Aufnahme des Führungselements hat; und
   bb) einerseits am Stutzen der Basis befestigt ist und andererseits mit einem unteren Ende der Ventilstange verbunden ist; und
c) einem Verriegelungsstück, das axial fixiert und radial verstellbar einen Mittelabschnitt des Hülsenstücks ummantelt, wobei das Verriegelungsstück:
   ca) zumindest eine Stellnut hat, die zur Führungsnut am Hülsenstück komplementär verläuft, zur Aufnahme des Führungselements bestimmt ist und einen Haltepunkt besitzt, der nicht kongruent zur Führungsnut liegt und der Einstellung der Blockierung der Relativbewegung zwischen Basis und Verschlusskörper dient; und
   cb) äusserlich eine Mitnehmerkontur zum Ansetzen eines Werkzeugs für die Verstellung des Verriegelungsstücks besitzt.

Das Führungselement ist stiftartig, welches das freie obere Ende des Zapfens T-förmig durchragt. Die Führungsnut am Hülsenstück und die Stellnut mit dem Haltepunkt am Verriegelungsstück sind vorzugsweise zweifach zueinander diametral angeordnet vorgesehen. Das Führungselement im Zusammenwirken mit der Stellnut und deren Haltepunkt sind nach dem Prinzip eines Bajonettverschlusses ausgebildet.

### Spezielle Merkmale für das Grundprinzip beider Varianten

Die Entwässerungsöffnung und der Ventilsitz des Hydranten sind im Steigrohr vorgesehen. Die Verbindung vom Steigrohr zum Wasserleitungsnetz ist direkt oder indirekt mit einem dazwischen installierten Einlaufrohr hergestellt.

Alternativ ist die Entwässerungsöffnung des Hydranten am Übergang vom Steigrohr zu einem Einlaufrohr vorgesehen, der zum Wasserleitungsnetz führt, und der Ventilsitz liegt im Einlaufrohr. Hierbei kann die Entwässerungsöffnung in einem Einsatz angeordnet sein. Dieser Einsatz ist zwischen einem unteren Flansch des Steigrohrs und einem oberen Flansch des Einlaufrohrs montiert, so dass die Entwässerungsöffnung zwischen unterem Flansch und oberem Flansch nach aussen mündet.

### Kurzbeschreibung der beigefügten Zeichnungen

Es zeigen:
- Figur 1A: - einen Hydranten, in Gestalt eines Unterflurhydranten, mit Schachtrohr und abgehobener Abdeckung sowie Einlaufrohr, in Perspektivansicht;
- Figur 1B: - einen Hydranten, in Gestalt eines Überflurhydranten, mit Aufsatzrohr und Einlaufrohr, in Perspektivansicht;
- Figur 1C: - die Kombination aus Steigrohr und Einlaufbogen aus Figur 1B mit sichtbarem Spindelaufsatz, in Perspektivansicht;
- Figur 1D: - den Aufbau gemäss Figur 1C, im vertikalen Teilschnitt durch Steigrohr und Einlaufbogen, mit einem Hauptventil *erster Variante* in Schliessstellung sowie ungelöster Arretierung zwischen Basis und Verschlusskörper des Hauptventils;
- Figur 1E: - den Aufbau gemäss Figur 1C, im Vertikalschnitt;

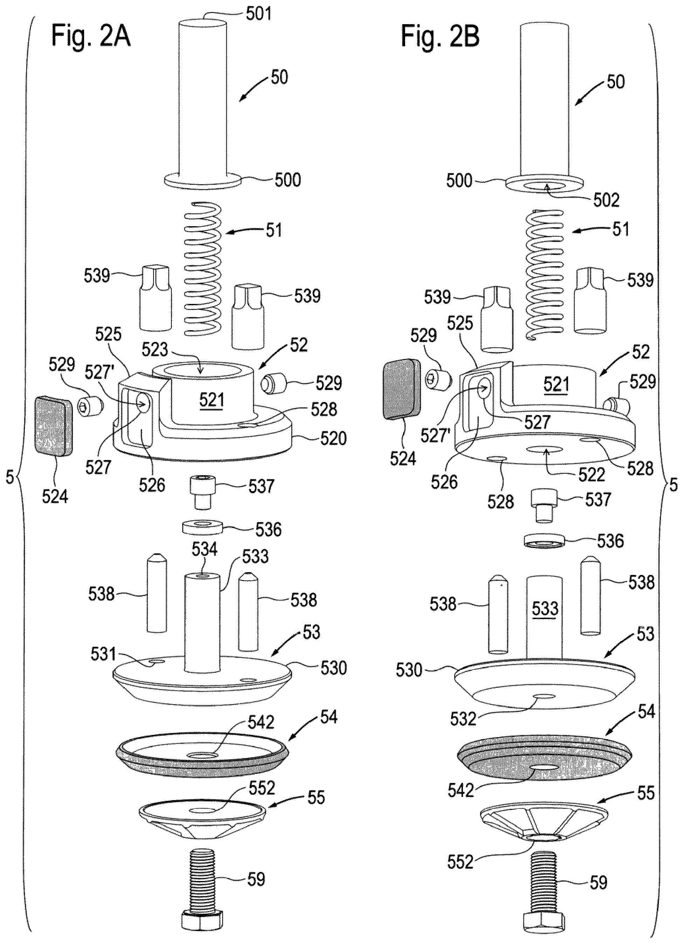

- Figur 2A: - das Hauptventil *erster Variante* aus Figur 1D, in perspektivischer Explosivansicht von oben;
- Figur 2B: - das Hauptventil *erster Variante* aus Figur 1D, in perspektivischer Explosivansicht von unten;

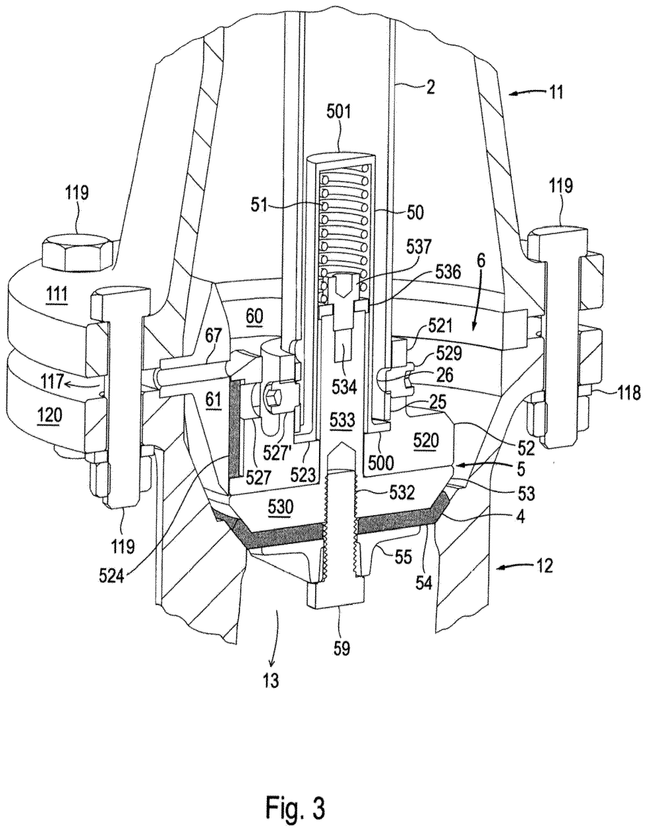

- Figur 3: - das vergrösserte Detail X1 aus Figur 1E;
- Figur 4A: - den Aufbau gemäss Figur 1D, mit angesetztem Werkzeug zum Lösen der Arretierung zwischen Basis und Verschlusskörper des Hauptventils;
- Figur 4B: - den Aufbau gemäss Figur 4A, mit zurückgezogenem Werkzeug nach Lösen der Arretierung zwischen Basis und Verschlusskörper des Hauptventils;
- Figur 4C: - den Aufbau gemäss Figur 4B, mit entferntem Werkzeug und gelöster Arretierung zwischen Basis und Verschlusskörper des Hauptventils;
- Figur 5A: - den Aufbau gemäss Figur 4C, mit dem Hauptventil *erster Variante* in Offenstellung, Verschlusskörper auf Ventilsitz ruhend und somit aktivierter Rückströmsicherung, im Vertikalschnitt;
- Figur 5B: - das vergrösserte Detail X2 aus Figur 5A;
- Figur 6A: - den Aufbau gemäss Figur 5A, mit dem Hauptventil *erster Variante* in Offenstellung, Verschlusskörper vom Ventilsitz abgehoben und somit momentaner Wasserentnahme, im Vertikalschnitt;
- Figur 6B: - das vergrösserte Detail X3 aus Figur 6A;

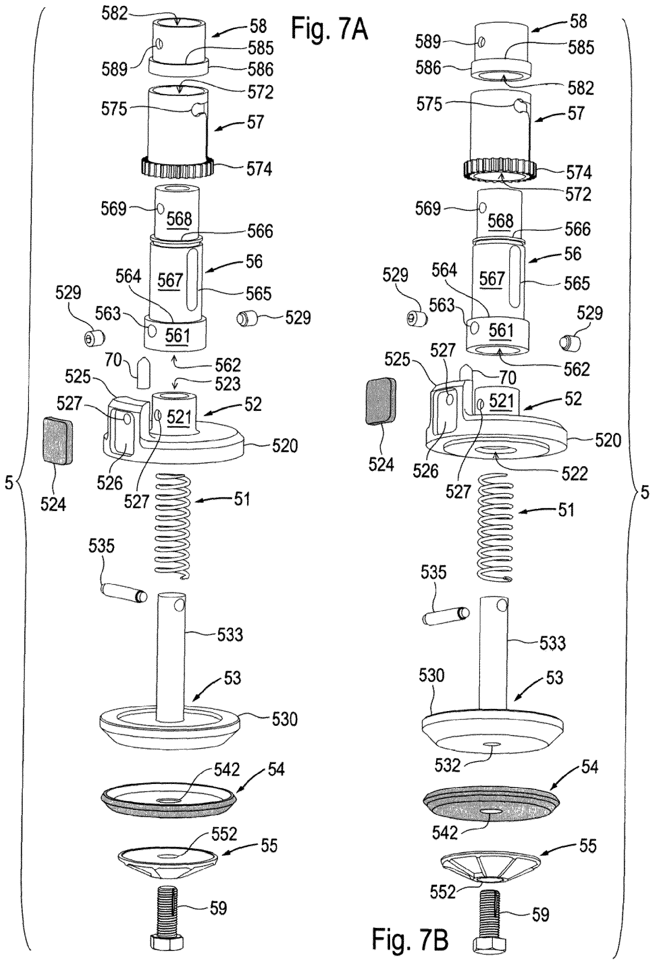

- Figur 7A: - ein Hauptventil *zweiter Variante,* in perspektivischer Explosivansicht von oben;
- Figur 7B: - das Hauptventil *zweiter Variante* gemäss Figur 7A, in perspektivischer Explosivansicht von unten;

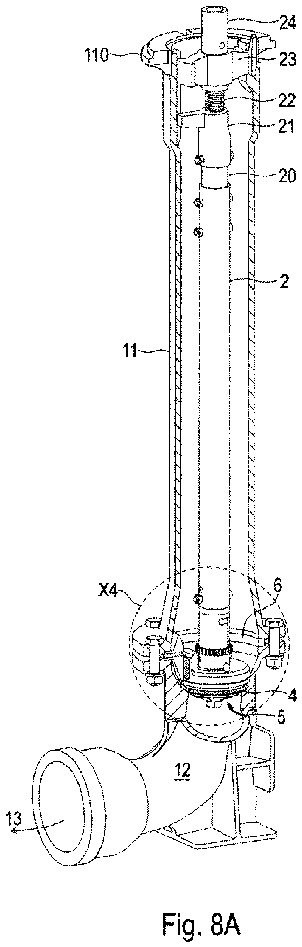

- Figur 8A: - den Aufbau gemäss Figur 1D, im vertikalen Teilschnitt durch Steigrohr und Einlaufbogen, mit dem Hauptventil *zweiter Variante,* in Schliessstellung sowie ungelöster Arretierung zwischen Basis und Verschlusskörper des Hauptventils;

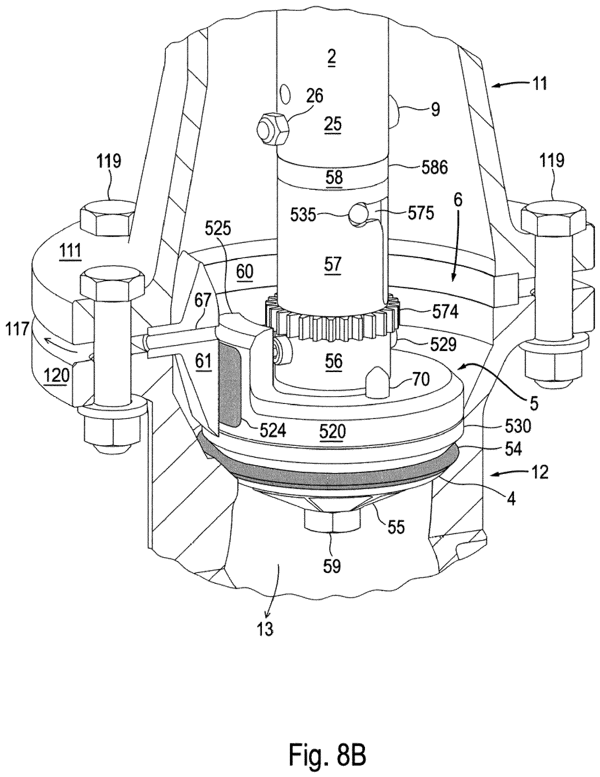

- Figur 8B: - das vergrösserte Detail X4 aus Figur 8A;
- Figur 9A: - den Aufbau gemäss Figur 8A, mit angesetztem Werkzeug zum Lösen der Arretierung zwischen Basis und Verschlusskörper des Hauptventils;
- Figur 9B: - den Aufbau gemäss Figur 9A, mit entferntem Werkzeug und gelöster Arretierung zwischen Basis und Verschlusskörper des Hauptventils;
- Figur 10A: - den Aufbau gemäss Figur 9B, mit dem Hauptventil *zweiter Variante* in Offenstellung, Verschlusskörper auf Ventilsitz ruhend und somit aktivierter Rückströmsicherung, im Vertikalschnitt;
- Figur 10B: - das vergrösserte Detail X5 aus Figur 10A;
- Figur 11A: - den Aufbau gemäss Figur 10A, mit dem Hauptventil *zweiter Variante* in Offenstellung, Verschlusskörper vom Ventilsitz abgehoben und somit momentaner Wasserentnahme, im Vertikalschnitt; und

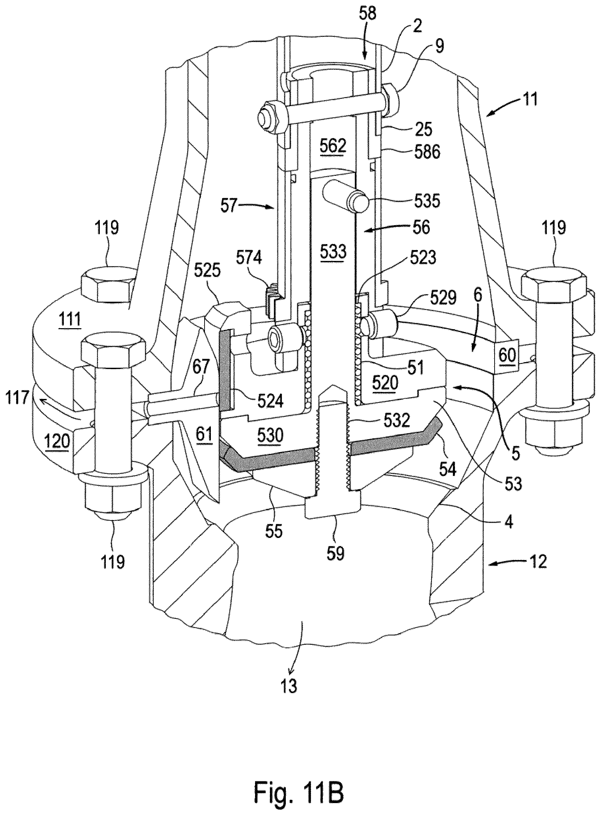

- Figur 11B: - das vergrösserte Detail X6 aus Figur 11A.

### Ausführungsbeispiel

Mit Bezug auf die beiliegenden Zeichnungen erfolgt nachstehend die detaillierte Beschreibung je eines Ausführungsbeispiels zu den beiden geschaffenen erfindungsgemässen Varianten eines Hydranten mit Hauptventil.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A und 1B

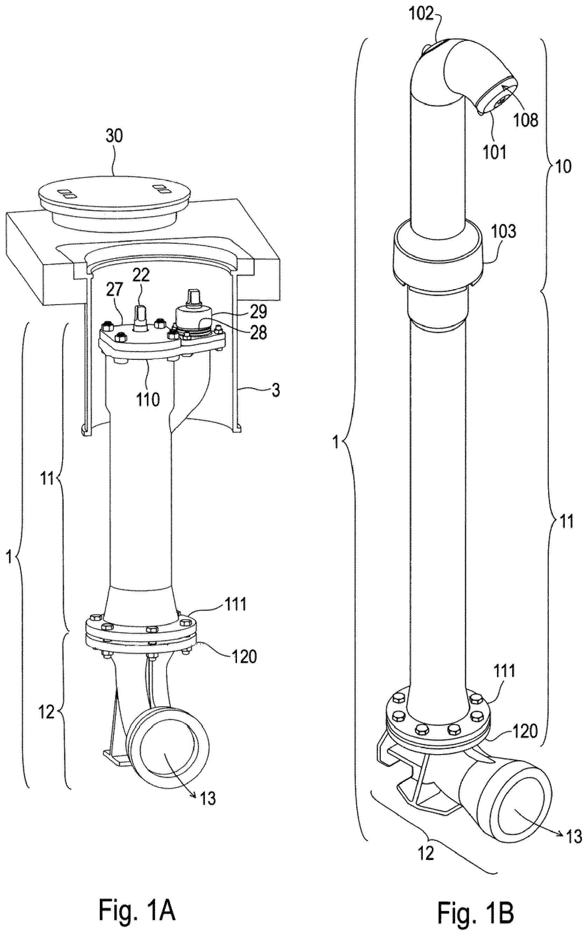

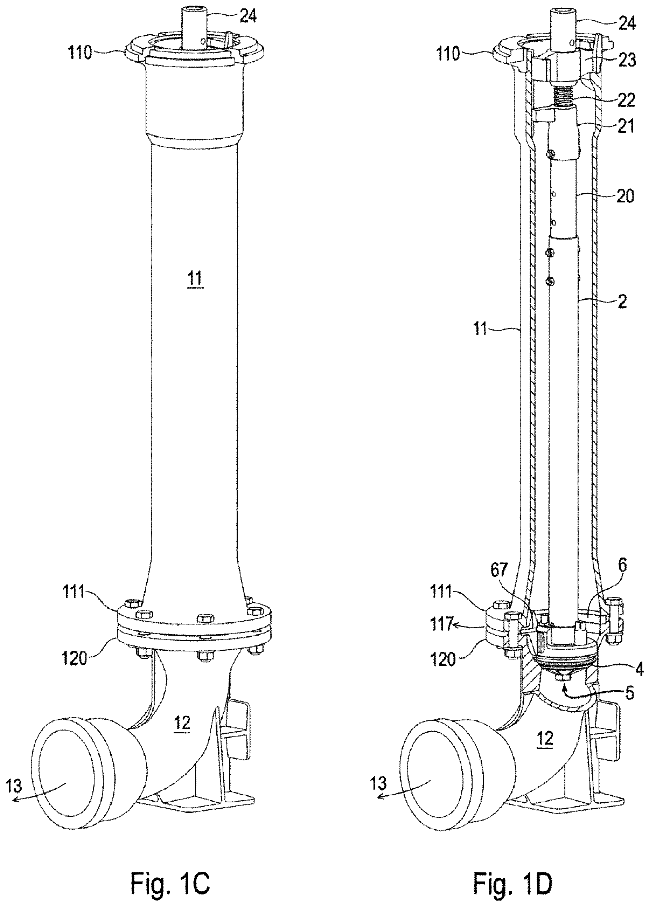

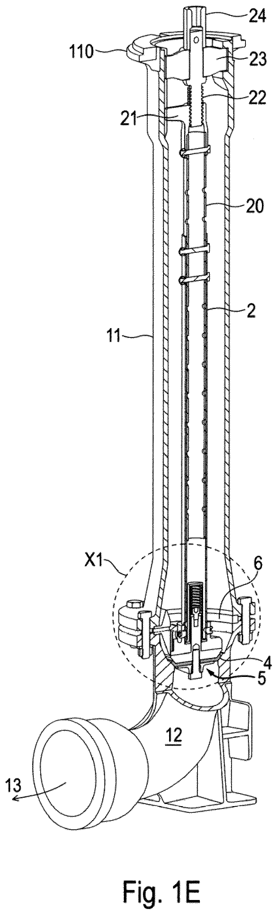

Die vorliegende Erfindung erstreckt sich auf beide Hydrantenarten, nämlich auf Unterflurhydranten **1** gemäss Figur 1A und Überflurhydranten **1** gemäss Figur 1B. Ein kompletter Unterflurhydrant **1** besteht im wesentlichen aus dem Steigrohr **11** und den hier nicht sichtbaren Einbauten. Zumeist ist an das Steigrohr **11** ein Einlaufrohr **12** - oftmals bogenförmig gestaltet - montiert, welches andererseits an das Leitungsnetz **13** angeschlossen ist. Das Einlaufrohr **12** hat einen oberen Flansch **120,** der mit dem unteren Flansch **111** des Steigrohrs **11** mittels Verschraubungen verbunden ist. Das Steigrohr **11** schliesst mit einem oberen Flansch **110** ab, auf dem ein Deckel **27** aufgeschraubt ist. Aus dem Deckel **27** ragt ein Fortsatz einer Spindel **22** hervor, bei deren Betätigung das im Unterflurhydranten **1** angeordnete Hauptventil zwischen einer Schliessstellung und einer zur Wasserentnahme bedingten Offenstellung einstellbar ist. Bei Nichtgebrauch ist der Anschluss **28,** an den für die Wasserentnahme zumeist ein Schlauch angekuppelt wird mit einer abnehmbaren Kappe **29** versehen. Der Kopf des Steigrohrs **11** wird üblicherweise von einem Schachtrohr **3** umgeben, welches in das Erdreich einzementiert und mit einer entfernbaren Abdeckung **30** oben verschlossen ist.

Beim Überflurhydranten **1** ist auf dem Steigrohr **11** ein in das Gelände aufragendes Aufsatzrohr **10** montiert. Der Übergang zwischen Steigrohr **11** und Aufsatzrohr **10** wird zumeist von einem Fundamentring **103** ummantelt. Der Zugang zur im Aufsatzrohr **10** sich erstreckenden Spindelverlängerung ist typisch mit einer Schutzkappe **102** verschlossen. Der Anschluss **108** zum Ankuppeln eines Schlauchs für die Wasserentnahme ist hinter einer abnehmbaren Verschlusskappe **101** verborgen. Die Installation des Überflurhydranten **1** im Wasserleitungsnetz **13** ist zum Unterflurhydranten **1** im Prinzip identisch und erfolgt wiederum entweder als direkte Verbindung zwischen Steigrohr **11** und Wasserleitungsnetz **13** oder mittels Zwischenfügung eines Einlaufrohrs **12,** das mit seinem oberen Flansch **120** mit dem unteren Flansch **111** des Steigrohrs **11** verschraubt ist.

### Figuren 1C bis 1E

Zur Begrenzung der Anzahl der Figuren und der zugehörigen Beschreibung wird im weiteren beispielhaft nur mehr auf den Überflurhydranten **1** gemäss Figur 1B Bezug genommen. Bei dieser Konstruktionsvariante eines Überflurhydranten **1** ist unten an das Steigrohr **11** ein Einlaufrohr **12** angeschlossen, in welchem der Ventilsitz **4** liegt, und die Entwässerungsöffnung **67** befindet sich in einem zwischen dem Steigrohr **11** und dem Einlaufrohr **12** montierten Einsatz **6,** so dass der Auslass **117** auch zwischen Steigrohr **11** und Einlaufrohr **12** in das Erdreich mündet. Der im Prinzip ringförmige Einsatz **6** ist zwischen dem oberen Flansch **120** des Einlaufrohrs **12** und dem unteren Flansch **111** des Steigrohrs **11** eingebaut. Fokussiert auf den Erfindungsgegenstand wird nur mehr der Bereich vom Einlaufrohr **12** bis zum oberen Flansch **110** des Steigrohrs **11** und dem herausragenden Spindelaufsatz **24** dargestellt, von dem beim kompletten Überflurhydranten **1** die Spindelverlängerung in das Aufsatzrohr **10** hineinragt.

Gleichwohl erstreckt sich die Erfindung auch auf Hauptventile **5** an Hydranten, bei denen die Entwässerungsöffnung **67** und der Ventilsitz **4** im Steigrohr **11** vorgesehen sind und die Verbindung vom Steigrohr **11** zum Wasserleitungsnetz **13** direkt oder indirekt mit einem dazwischen installierten Einlaufrohr **12** hergestellt ist.

Im Steigrohr **11** axial verläuft die Ventilstange **2,** an deren unterem Ende das Hauptventil **5** *erster Variante* befestigt ist und auf deren oberem Ende die Spindelmutter **21** steckt. Gegenwärtig befindet sich das Hauptventil **5** in Schliessstellung, versperrt also den Ventilsitz **4.** Zur Längenanpassung kann zwischen Spindelmutter **21** und Ventilstange **2** eine konventionelle Ventilstangenverlängerung **20** eingebaut sein. Aufbau, Anordnung, Funktion und Wirkungsweise von Spindelmutter **21,** Spindel **22** und Spindellager **23** sind hinlänglich allgemein bekannt und bedürfen daher keiner weiteren Beschreibung.

### Figuren 2A und 2B

Dieses Figurenpaar veranschaulicht die Einzelteile ,des Hauptventils **5** *erster Variante,* das im wesentlichen besteht aus einer Hülse **50,** einer spiralförmigen Feder **51,** einer Basis **52,** einem Verschlusskörper **53,** einer Hauptdichtung **54** und einem Konterteller **55.**

Die zylindrische Hülse **50** hat an einem Ende einen umlaufenden Flansch **500,** innerhalb dessen der innere Hohlraum **502** als Öffnung nach aussen mündet. Das andere Ende der Hülse **50** wird von einer Dachwandung **501** gebildet.

Die Basis **52** hat unten den tellerförmigen Boden **520,** von dem sich aufwärts konzentrisch ein Stutzen **521** erstreckt. Durch die Basis **52** verläuft ein Axialdurchgang **522** mit einer auf Höhe des abgehenden Stutzens **521** liegenden inneren Ringschulter **523.** Radial vom Boden **520** erhebt sich ein Ansatz **525,** der etwa mit der Oberkante des Stutzens **521** endet. Im Ansatz **525** ist ein vertieftes Nest **526** mit einem Durchgangsloch **527** vorhanden, das zu beiden Innengewindebohrungen **527'** des Stutzens **521** fluchtet. Ein Dichtungselement **524** ist zum Einsetzen in das Nest **526** bestimmt, und die Fixierelemente **529,** vorzugsweise Schrauben, sind zum Eingriff in die Innengewindebohrungen **527'** vorgesehen. Zwei diametral gegenüberliegende Durchgangslöcher **528,** beidseits des Stutzens **521,** durchragen den Boden **520** senkrecht.

Der Verschlusskörper **53** hat einen Teller **530,** von dessen Oberseite sich zentrisch und senkrecht ein Zapfen **533** erstreckt. Am oberen freien Ende des Zapfens **533** mündet eine obere Innengewindebohrung **534,** während axial dazu an der Unterseite des Tellers **530** eine untere Innengewindebohrung **532** mündet. An der Oberseite, beidseits des Zapfens **533,** sind zwei sich diametral gegenüberliegende Ankerpunkte **531** vorhanden - z.B. Sacklöcher -, um daran je einen Bolzen **538** zu befestigen, die dann komplementär zu den Durchgangslöchern **528** in der Basis **52** ausgerichtet sind. Die Bolzen **538** haben eine Fixierkontur - vorzugsweise ein Gewinde -, um daran die Sicherungselemente **539** lösbar anzubringen. Im partiell montierten Zustand liegt die Scheibe **536** auf dem freien Ende des Zapfens **533** und ist mit der in die obere Innengewindebohrung **534** eingreifenden Schraube **537** gesichert. Die Hauptdichtung **54** ist von unten über den Teller **530** des Verschlusskörpers **53** gestülpt und wird vom an die Hauptdichtung **54** angelegten Konterteller **55** in Position gehalten, wenn das schraubenförmige Verbindungselement **59** durch das zentrische Durchgangsloch **552** des Kontertellers **55** und das zentrische Durchgangsloch **542** in der Hauptdichtung **54** in die untere Innengewindebohrung **532** eingreift.

### Figur 3

Es wird vom vollständig montierten Zustand, der Schliessstellung des Hauptventils **5** und der ungelösten Arretierung zwischen Basis **52** und Verschlusskörper **53** gemäss Figur 1D ausgegangen. Zwischen dem unteren Flansch **111** des Steigrohrs **11** und dem oberen Flansch **120** des Einlaufrohrs **12** liegt das Ringsegment **60** des Einsatzes **6,** so dass als in das Erdreich mündender Auslass **117** nach aussen ein Spalt zwischen den Flanschen **111,120** verbleibt. Radial vom Ringsegment **60** erstreckt sich ein Peripheriesegment **61** mit der darin vorhandenen Entwässerungsöffnung **67,** welche momentan offen ist. Steigrohr **11** und Einlaufrohr **12** sind mittels der durch die Flansche **111,120** angebrachten Schraubverbindungen **119** mit zugehörigen Unterlegscheiben **118** aneinander montiert.

Die Hülse **50** sitzt mit ihrem Flansch **500,** im Axialdurchgang **522** des Stutzens **521** steckend, auf der inneren Ringschulter **523** der Basis **52** auf und ragt von unten in die Ventilstange **2** hinein, so dass die Hülse **50** oben mit Dachwandung **501** abschliesst. Zugleich setzt das untere Ende **25** der Ventilstange **2** auf dem Flansch **500** auf. Die Fixierelemente **529** stecken in den Innengewindebohrungen **527'** am Stutzen **521** der Basis **52** und greifen in komplementär positionierte Löcher **26** am Ende **25** der Ventilstange **2** ein. Damit ist die Anordnung aus Basis **52,** Ventilstange **2** und Hülse **50** miteinander verbunden.

Die im Hohlraum **502** der Hülse **50** untergebrachte Feder **51** stützt sich einerseits an der Dachwandung **501** ab und sitzt andererseits radial auf der Scheibe **536** auf. Bei der gegenwärtigen Schliessstellung des Hauptventils **5** und der ungelösten Arretierung zwischen Basis **52** und Verschlusskörper **53 -** die Sicherungselemente **539** sind auf den Bolzen **538** fixiert und somit Basis **52** und Verschlusskörper **53** zusammengeführt - ist die Feder **51** eng zusammengedrückt. Der Verschlusskörper **53** mit seiner Hauptdichtung **54** ist auf dem Ventilsitz **4** dichtend positioniert, nämlich durch die Schliesskraft über die Ventilstange **2.**

Das Dichtungselement **524** gibt die Entwässerungsöffnung **67** frei, so dass im Steigrohr **11** befindliches Wasser abfliessen kann. Der Hydrant **1** soll sich auch selbsttätig entleeren, wenn die Hauptabsperrung im zuführenden Strang des Wasserleitungsnetzes **13** geschlossen wird. Zur Gewährleistung der Funktion der Selbstentleerung des Hydranten **1** muss sichergestellt sein, dass nach dem Schliessen der Hauptabsperrung Luft in das Innere des Hydranten **1** nachfliessen kann.

### Figuren 4A bis 4C

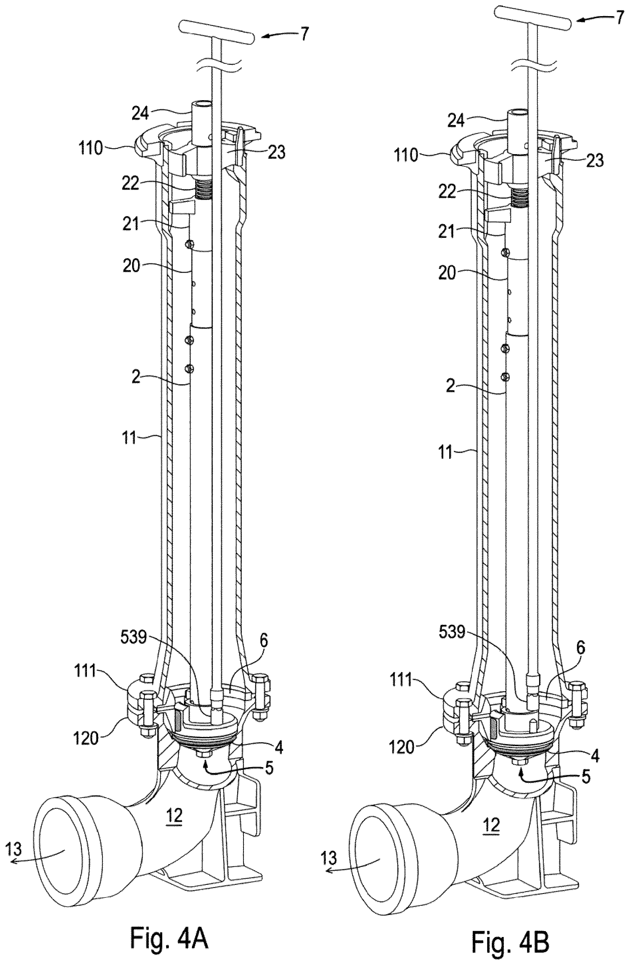

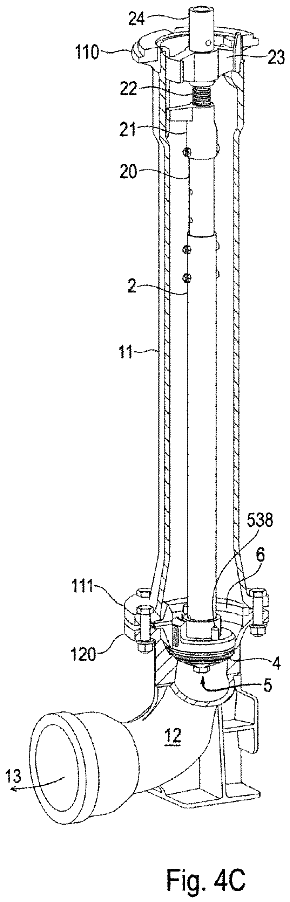

Diese Figurenfolge illustriert bei geschlossenem Hauptventil **5** das Lösen der Arretierung zwischen Basis **52** und Verschlusskörper **53.** Mit einem durch den Hydranten **1** bis an die Sicherungselemente **539** heranreichenden Werkzeug **7** wird an diesen angesetzt (s. Figur 4A). Mit dem Werkzeug **7** löst man die Sicherungselemente **539** von den Bolzen **538** (s. Figur 4B) und zieht das Werkzeug **7** schliesslich mit dem jeweils gelösten Sicherungselement **539** aus dem Hydranten **1** heraus, so dass die Arretierung zwischen Basis **52** und Verschlusskörper **53** nun aufgehoben ist (s. Figur 4C).

### Figuren 5A und 5B

Nach gelöster Arretierung zwischen Basis **52** und Verschlusskörper **53** wird durch Betätigung der Spindel **22** und dem daraus folgenden Aufwärtshub der Ventilstange **2** das Hauptventil **5** in seine Offenstellung gebracht. Das hochgefahrene Dichtungselement **524** hat die Entwässerungsöffnung **67** versperrt. Es wird weiter vorausgesetzt, dass kein Durchfluss aus dem Wasserleitungsnetz **13** durch den Hydranten **1** aus dem Anschluss **108** heraus erfolgt. Beim Abheben des Hauptventils **5** vom Ventilsitz **4** würde zwischen beiden ein Abstand entstehen und der Strömungsweg durch den Ventilsitz **4** frei werden, jedoch treibt die Feder **51** den Zapfen **533** aus der Basis **52** abwärts und drückt damit den Verschlusskörper **53** mit seiner Hauptdichtung **54** auf den Ventilsitz **4.** Bei versuchter Einleitung von Medium über den Hydranten **1** in das Wasserleitungsnetz **13** wird vom Druck des aufseiten des Tellers **530** anstehenden Mediums das abdichtende Anpressen der Hauptdichtung **54** auf den Ventilsitz **4** noch intensiviert, wodurch ein unzulässiges Einbringen von Medium in das Wasserleitungsnetz **13** blockiert ist.

### Figuren 6A und 6B

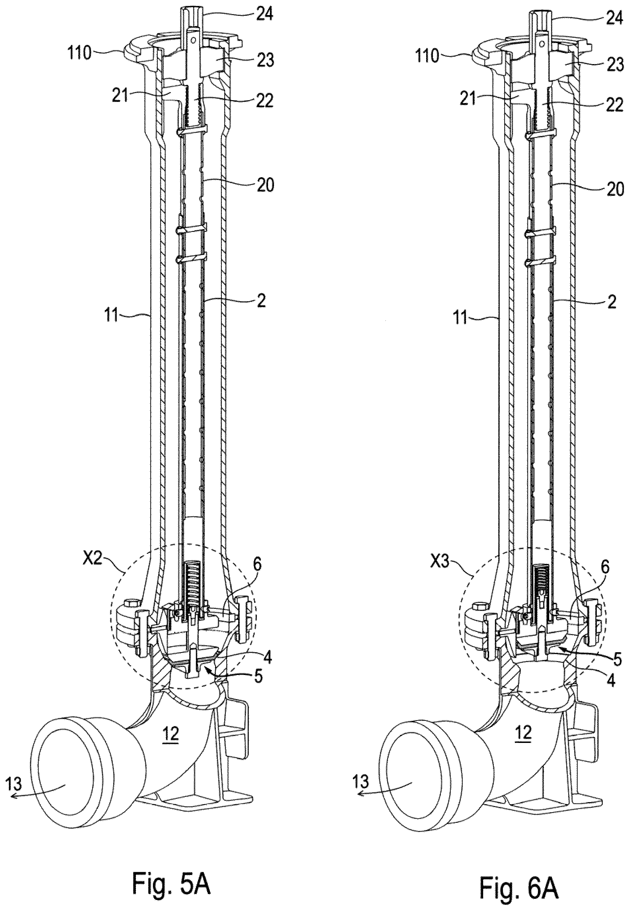

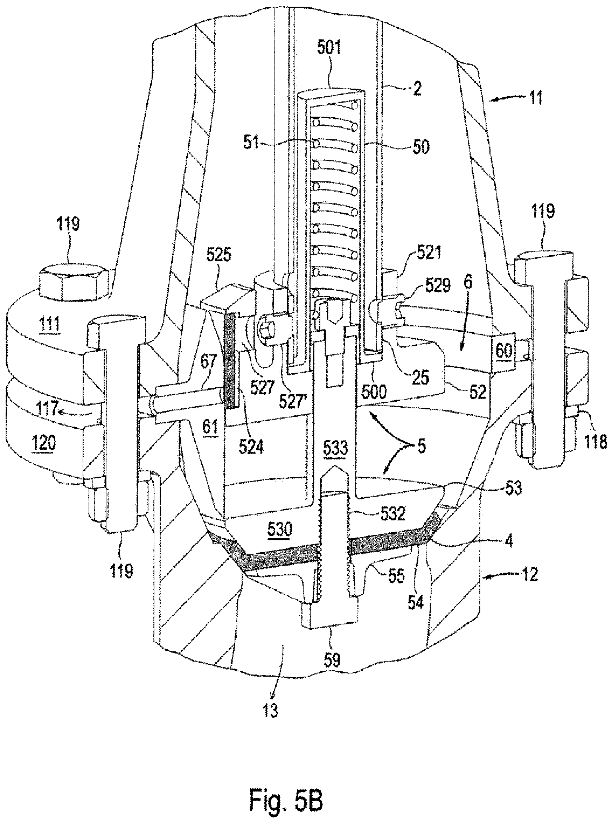

Bei diesem Figurenpaar ist ein insoweit geänderter Betriebszustand am Hydranten **1** illustriert, als nun bei Offenstellung des Hauptventils **5** und gelöster Arretierung zwischen Basis **52** und Verschlusskörper **53** ein Durchfluss aus dem Wasserleitungsnetz **13** durch den Hydranten **1** aus dem Anschluss **108** heraus erfolgt. Die Entwässerungsöffnung **67** bleibt vom Dichtungselement **524** versperrt. Der Durchfluss in der erlaubten Richtung wird dadurch ermöglicht, dass die Basis **52** aufwärts gefahren verharrt und der Verschlusskörper **53** mit seiner Hauptdichtung **54** gegen die Kraft der Feder **51** vom Druck des Durchflusses, nämlich vom dabei auftretenden Differenzdruck in der Strömung, vom Ventilsitz **4** hin zur Basis **52** weggedrückt wird. Bei Unterbrechung oder Abstellen des Durchflusses in der erlaubten Richtung stellt sich durch die dann allein wirksame Feder **51** wieder der Sicherheitszustand gemäss den Figuren 5A und 5B ein.

### Figuren 7A und 7B

Von nun an bis zum Ende betreffen alle weiteren Figuren das Hauptventil **5** in einer *zweiten Variante,* wobei zur textlichen Straffung nur die Unterschiede zum Hauptventil **5** *erster Variante* beschrieben werden. Wiederum vorhanden sind die Feder **51,** die Basis **52,** der Verschlusskörper **53** mit der daran anzulegenden Hauptdichtung **54,** der Konterteller **55** und das Verbindungselement **59,** wobei letzteres die Anordnung aus Verschlusskörper **53,** Hauptdichtung **54** und Konterteller **55** zusammenhält. Neu umfasst die *zweite Variante* des Hauptventils **5** ein Hülsenstück **56,** ein Verriegelungsstück **57** und das Verbindungsstück **58.**

Die Basis **52** ist geringfügig modifiziert, so liegt die interne Ringschulter **523** jetzt an der Mündung des Axialdurchgangs **522** aus dem freien Ende des Stutzens **521,** und anstelle der vorherigen Innengewindebohrungen **527'** sind nun einfache Löcher **527** vorgesehen. Ein Positionierelement **70** ist zur Platzierung auf der Oberseite des Bodens **520** der Basis **52** bestimmt. Beim Verschlusskörper **53** entfallen jetzt die Scheibe **536** und die Schraube **537,** jedoch kreuzt T-förmig nun ein Führungselement **535** in Gestalt eines Stifts das obere Ende des Zapfens **533.**

Das Hülsenstück **56** hat am unteren Ende einen Bund **561,** mit zwei sich diametral gegenüberliegenden, horizontal zueinander fluchtenden Innengewindebohrungen **563** und einer äusseren unteren Ringschulter **564** am Übergang zum im Durchmesser kleineren Mittelabschnitt **567.** In axialer Erstreckungsrichtung des Hülsenstücks **56** verläuft über den Mittelabschnitt **567** eine Führungsnut **565.** Der Mittelabschnitt **567** endet mit einer oberen Ringschulter **566,** an die sich ein Kopfabschnitt **568** anschliesst, welcher zwei horizontal zueinander fluchtende Durchgangslöcher **569** hat. Durch das Hülsenstück **56** verläuft ein Axialdurchgang **562** mit einer nicht bezeichneten, vonseiten des Bundes **561** den Axialdurchgang **562** verengenden internen Ringschulter.

Das zylinderförmige Verriegelungsstück **57** besitzt einen Axialdurchgang **572** und am unteren Ende eine äussere Mitnehmerkontur **574,** die z.B. zahnkranzförmig beschaffen ist. An der Mantelfläche hat das Verriegelungsstück **57** eine Stellnut **575** mit vertikalen, kongruent zur Führungsnut **565** im Hülsenstück **56** liegenden Strecken sowie einem abseits liegenden Haltepunkt, so dass sich eine Bajonettkontur ergibt.

Das hülsenförmige Verbindungsstück **58** hat unten den Bund **586,** der an einer äusseren Ringschulter **585** in einen im Aussendurchmesser verkleinerten Zylinderabschnitt übergeht, welcher zwei horizontal zueinander fluchtende Durchgangslöcher **589** hat. Durch das Verbindungsstück **58** erstreckt sich der Axialdurchgang **582.**

### Figuren 8A und 8B

Es wird vom vollständig montierten Zustand des Hauptventils **5** *zweiter Variante,* dessen momentaner Schliessstellung mit freier Entwässerungsöffnung **67** und der ungelösten Arretierung zwischen Basis **52** und Verschlusskörper **53** ausgegangen. Das auf das Hülsenstück **56** aufgesteckte Verriegelungsstück **57** ist so gedreht, dass das Führungselement **535** im abseitigen Haltepunkt der Stellnut **575** sitzt. Die Fixierelemente **529** sind von aussen horizontal in das Hülsenstück **56** eingebracht, vorzugsweise eingeschraubt. Auf der Oberseite des Bodens **520** der Basis **52** ist das aufragende Positionierelement **70** sichtbar. Mittels des Verbindungsstücks **58,** welches zwischen dem Verriegelungsstück **57** und der Ventilstange **2** eingefügt ist, und der horizontalen Verschraubung **9** wird die Anordnung mit dem Hülsenstück **56** zusammengehalten.

### Figuren 9A und 9B

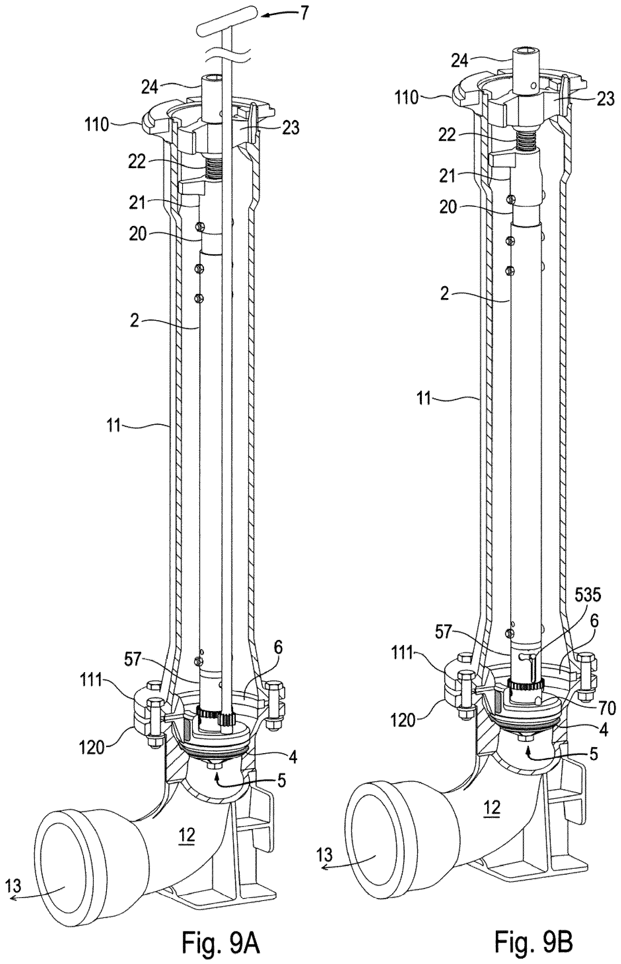

Dieses Figurenpaar illustriert bei geschlossenem Hauptventil **5** *zweiter Variante* das Lösen der Arretierung zwischen Basis **52** und Verschlusskörper **53.** Mit einem durch den Hydranten **1** bis auf das Positionierelement **70** heranreichenden Werkzeug **7** bringt man die Mitnehmerkontur **574** am Verriegelungsstück **57** mit der Gegenkontur des Werkzeugs **7** in Eingriff (s. Figur 9A). Bei drehender Betätigung des Werkzeugs **7** wird das Verriegelungsstück **57** mitgedreht, bis das Führungselement **535,** welches die senkrechten Führungsnuten **565** durchragt, aus dem abseitigen Haltepunkt heraus an die vertikale Strecke der Stellnut **575** gelangt. Nun zieht man das Werkzeug **7** aus dem Hydranten **1** heraus und die Arretierung zwischen Basis **52** und Verschlusskörper **53** ist aufgehoben (s. Figur 9B).

### Figuren 10A und 10B

Nach gelöster Arretierung zwischen Basis **52** und Verschlusskörper **53** wird durch Betätigung der Spindel **22** und dem daraus folgenden Aufwärtshub der Ventilstange **2** das Hauptventil **5** in seine Offenstellung gebracht. Das hochgefahrene Dichtungselement **524** hat die Entwässerungsöffnung **67** versperrt. Es wird weiter vorausgesetzt, dass kein Durchfluss aus dem Wasserleitungsnetz **13** durch den Hydranten **1** aus dem Anschluss **108** heraus erfolgt. Beim Abheben des Hauptventils **5** vom Ventilsitz **4** würde zwischen beiden ein Abstand entstehen und der Strömungsweg durch den Ventilsitz **4** frei werden, jedoch stösst die auf dem Zapfen **533** steckende, sich nun etwas entspannende Feder **51,** welche oben an der internen Ringschulter **523** im Stutzen **521** anschlägt und unten auf der Oberseite des Tellers **530** des Verschlusskörpers **53** aufsetzt, den Verschlusskörper **53** mit seiner Hauptdichtung **54** auf den Ventilsitz **4.**

Der Zusammenbau aus den Stutzen **521** der Basis **52** übergreifenden Bund **561** des Hülsenstücks **56** ist mittels der schraubbaren Fixierelemente **529,** welche in den Innengewindebohrungen **563** stecken und in die Löcher **527** eingreifen, gesichert. Das Loch **527** im Ansatz **525** dient dem Zuführen eines Schraubwerkzeugs an das benachbarte Fixierelement **529.** Der Bund **561** sitzt unten auf der Oberseite des Bodens **520** und die interne Ringnut des Hülsenstücks **56** auf dem Stutzen **521** auf. Im Axialdurchgang **562** steht Hubraum für die Aufwärtsbewegung des Zapfens **533** zur Verfügung. Die Unterkante des Verriegelungsstücks **57** ruht auf der unteren Ringschulter **564,** und der Bund **586** des Verbindungsstücks **58** sitzt auf der oberen Ringschulter **566** sowie auf dem oberen Ende des Verriegelungsstücks **57,** welches damit axial fixiert und radial drehbar ist. Das Verbindungsstück **58** nimmt in sich den Kopfabschnitt **568** und aussen das untere Ventilstangenende **25** auf, welches sich auf der äusseren Ringschulter **585** abstützt. Die Verschraubung **9** durchragt die Löcher **26** in der Ventilstange **2,** die Löcher **589** im Verbindungsstück **58** und die Löcher **569** im Hülsenstück **56,** somit ist die Ventilstange **2** mit dem Hauptventil **5** verbunden.

Auch beim Häuptventil **5** *zweiter Variante* wird bei versuchter Einleitung von Medium über den Hydranten **1** in das Wasserleitungsnetz **13** vom Druck des aufseiten des Tellers **530** anstehenden Mediums das abdichtende Anpressen der Hauptdichtung **54** auf den Ventilsitz **4** wieder intensiviert, so dass ein unzulässiges Einbringen von Medium in das Wasserleitungsnetz **13** blockiert ist.

### Figuren 11A und 11B

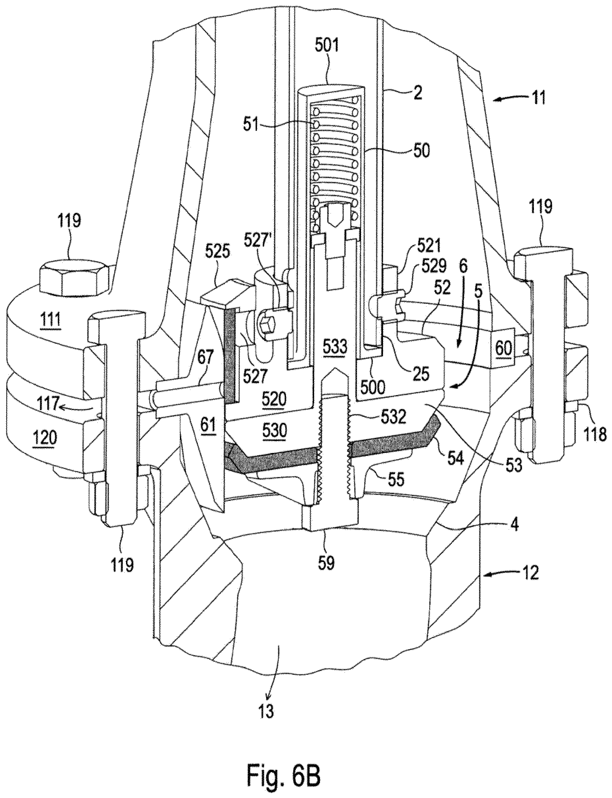

Äquivalent zu den Figuren 6A und 6B wird nun der geänderte Betriebszustand am Hydranten **1** angenommen, wonach bei Offenstellung des Hauptventils **5** und gelöster Arretierung zwischen Basis **52** und Verschlusskörper **53** ein Durchfluss aus dem Wasserleitungsnetz **13** durch den Hydranten **1** aus dem Anschluss **108** heraus erfolgt. Die Entwässerungsöffnung **67** bleibt vom sich mit der Basis **52** nicht verschobenen Dichtungselement **524** versperrt.

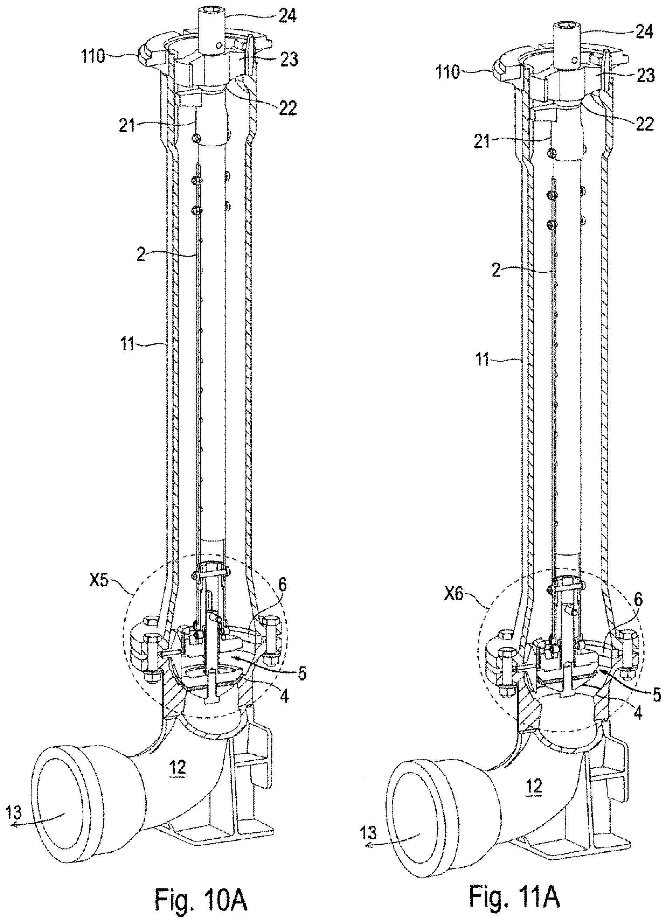

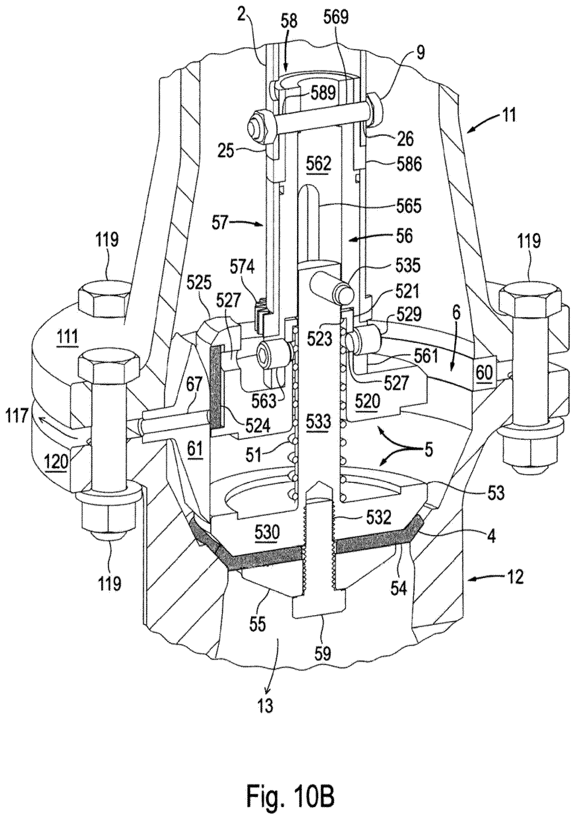

Beim Durchfluss in der erlaubten Richtung verharrt die aufwärts gefahrene Basis **52,** und der Verschlusskörper **53** mit seiner Hauptdichtung **54** wird gegen die Kraft der Feder **51** vom Druck des Durchflusses, nämlich vom dabei auftretenden Differenzdruck in der Strömung, vom Ventilsitz **4** hin zur Basis **52** weggedrückt. Hierbei wird die Feder **51** zusammengestaucht. Bei Unterbrechung oder Abstellen des Durchflusses in der erlaubten Richtung stellt sich durch die dann allein wirksame Feder **51** wieder der Sicherheitszustand gemäss den Figuren 10A und 10B ein.

## Patentansprüche

1. Hydrant (**1**) mit einem Hauptventil (**5**), der zur Installation in einem Wasserleitungsnetz (**13**) bestimmt ist, mit:
a) einem zur Wasserentnahme dienenden Anschluss (**108,28**);
b) einem Steigrohr (**11**) und einer darin sich erstreckenden betätigbaren Ventilstange (**2**), die mit dem Hauptventil (**5**) verbunden ist und mittels derer das Hauptventil (**5**) zwischen einer Schliessstellung und einer zur Wasserentnahme bedingten Offenstellung einstellbar ist;
c) einem Ventilsitz (**4**) und einem zum Zusammenwirken mit dem Ventilsitz (**4**) bestimmten Verschlusskörper (**53**), der Bestandteil des Hauptventils (**5**) ist; und
d) einer Entwässerungsöffnung (**67**), welche bei Nichtgebrauch des Hydranten (**1**) zur selbsttätigen Entleerung des im Hydranten (**1**) verbliebenen Wassers vorgesehen ist; wobei
e) das Hauptventil (**5**) Mittel (**51-53**) zur Verhinderung des Einbringens von Medium durch den Ventilsitz (**4**) in das Wasserleitungsnetz (**13**) über den Hydranten (**1**) bei einer zur Wasserentnahme Offenstellung des Hauptventils (**5**) und bei fehlendem Durchfluss aus dem Wasserleitungsnetz (**13**) durch den Hydranten (**1**) aufweist, **dadurch gekennzeichnet, dass** die Mittel (**51-53**) am Hauptventil (**5**) umfassen:
f) eine Basis (**52**), die fest mit der Ventilstange (**2**) verbunden ist; und
g) den Verschlusskörper (**53**), welcher dem Ventilsitz (**4**) zugewandt auf einer Feder (**51**) gelagert mit der Basis (**52**) verbunden ist, wobei:
h) in der Schliessstellung des Hauptventils (**5**) der Verschlusskörper (**53**) mit seiner Hauptdichtung (**54**) auf dem Ventilsitz (**4**) diesen abdichtend aufsitzt und die Basis (**52**) gegen die Kraft der Feder (**51**) an den Verschlusskörper (**53**) gefahren ist;
i) in der Offenstellung des Hauptventils (**5**) und bei fehlendem Durchfluss aus dem Wasserleitungsnetz (**13**) durch den Hydranten (**1**) aus dem Anschluss (**108,28**) heraus, die Basis (**52**) aufwärts gefahren ist und der Verschlusskörper (**53**) mit seiner Hauptdichtung (**54**) von der Kraft der Feder (**51**) auf den Ventilsitz (**4**) abdichtend aufgepresst ist;
j) in der Offenstellung des Hauptventils (**5**) und bei vorhandenem Durchfluss aus dem Wasserleitungsnetz (**13**) durch den Hydranten (**1**) aus dem Anschluss (**108,28**) heraus, die Basis (**52**) aufwärts gefahren verharrt und der Verschlusskörper (**53**) mit seiner Hauptdichtung (**54**) gegen die Kraft der Feder (**51**) vom Druck des Durchflusses, nämlich vom dabei auftretenden Differenzdruck in der Strömung, vom Ventilsitz (**4**) weggedrückt ist; und
k) in der Offenstellung des Hauptventils (**5**) und bei versuchter Einleitung von Medium über den Hydranten (**1**) in das Wasserleitungsnetz (**13**) die Basis (**52**) aufwärts gefahren ist und der Verschlusskörper (**53**) mit seiner Hauptdichtung (**54**) von der Kraft der Feder (**51**) und vom Druck des anstehenden Mediums auf den Ventilsitz (**4**) abdichtend aufgepresst ist, wodurch das Einbringen von Medium in das Wasserleitungsnetz (**13**) blockiert ist.

2. Hydrant (**1**) nach Anspruch 1, **dadurch gekennzeichnet, dass** die Basis (**52**) mit einem Dichtungselement (**524**) versehen ist, wobei:
a) in der Offenstellung des Hauptventils (**5**) sich das Dichtungselement (**524**) in einer Position befindet, um die Entwässerungsöffnung (**67**) am Hydranten (**1**) zu versperren; und
b) in der Schliessstellung des Hauptventils (**5**) sich das Dichtungselement (**524**) in einer Position befindet, um die Entwässerungsöffnung (**67**) am Hydranten (**1**) für eine selbsttätige Entleerung des im Hydranten (**1**) verbliebenen Wassers frei zu geben.

3. Hydrant (**1**) nach zumindest einem der Ansprüche 1 und 2, **dadurch gekennzeichnet, dass** am Hauptventil (**5**) lösbare Arretiermittel zur Blockierung einer Relativbewegung zwischen der Basis (**52**) und dem Verschlusskörper (**53**) mit seiner Hauptdichtung (**54**) vorhanden sind.

4. Hydrant (**1**) nach zumindest einem der Ansprüche 1 bis 3, **dadurch gekennzeichnet, dass**
a) der Verschlusskörper (**53**) unten einen Teller (**530**) besitzt, von dem sich zentrisch ein senkrechter Zapfen (**533**) erhebt, der verschiebbar in einen Axialdurchgang (**522**) der Basis (**52**) hineinragt; und
b) die Feder (**51**) auf ein freies oberes Ende des Zapfens (**533**) einwirkt.

5. Hydrant (**1**) nach zumindest einem der Ansprüche 1 bis 4, **dadurch gekennzeichnet, dass**
a) die Feder (**51**) in einer Hülse (**50**) untergebracht ist und sich darin an einer Dachwandung (**501**) abstützt;
b) die Basis (**52**) unten einen Boden (**520**) besitzt, von dem sich zentrisch ein senkrechter Stutzen (**521**) erhebt, in dem ein unteres Ende der Hülse (**50**) und ein unteres Ende (**25**) der Ventilstange (**2**) fixiert sind; und
c) sich die Hülse (**50**) aufwärts in die Ventilstange (**2**) erstreckt.

6. Hydrant (**1**) nach Anspruch 5, **dadurch gekennzeichnet, dass** die lösbaren Arretiermittel zur Blockierung der Relativbewegung zwischen Basis (**52**) und Verschlusskörper (**53**) bestehen aus:
a) zumindest einem vom Teller (**530**) des Verschlusskörpers (**53**) aufragenden Bolzen (**538**), der ein Durchgangsloch (**528**) im Boden (**520**) der Basis (**52**) durchragt; und
b) einem Sicherungselement (**539**), das lösbar auf einem freien Ende des Bolzens (**538**) angebracht ist und somit auf einer Deckfläche des Bodens (**520**) aufsitzt, so dass im blockierten Zustand Basis (**52**) und Verschlusskörper (**53**) gegen die Kraft der Feder (**51**) zusammengedrängt sind, wobei:
c) Bolzen (**538**), Durchgangsloch (**528**) und Sicherungselement (**539**) vorzugsweise zweifach zueinander diametral angeordnet vorgesehen sind.

7. Hydrant (**1**) nach zumindest einem der Ansprüche 1 bis 3, **dadurch gekennzeichnet, dass**
a) der Verschlusskörper (**53**) unten einen Teller (**530**) besitzt, von dem sich zentrisch ein senkrechter Zapfen (**533**) erhebt, der verschiebbar in einen Axialdurchgang (**522**) der Basis (**52**) hineinragt; und
b) die Feder (**51**) um den Zapfen (**533**) angeordnet ist und auf den Teller (**530**) einwirkt.

8. Hydrant (**1**) nach Anspruch 7, **dadurch gekennzeichnet, dass**
a) die Basis (**52**) unten einen Boden (**520**) besitzt, von dem sich zentrisch ein senkrechter Stutzen (**521**) erhebt, mit dem ein unteres Ende (**25**) der Ventilstange (**2**) verbunden ist; und
b) die Feder (**51**) sich an einer internen Ringschulter (**523**) im Axialdurchgang (**522**) des Stutzens (**521**) der Basis (**52**) abstützt.

9. Hydrant (**1**) nach zumindest einem der Ansprüche 5 und 8, **dadurch gekennzeichnet, dass** die lösbaren Arretiermittel zur Blockierung der Relativbewegung zwischen Basis (**52**) und Verschlusskörper (**53**) bestehen aus:
a) einem Führungselement (**535**), das an einem freien oberen Ende des Zapfens (**533**) angeordnet ist;
b) einem Hülsenstück (**56**) mit einem Axialdurchgang (**562**), in den der Zapfen (**533**) des Verschlusskörpers (**53**) hineinragt, wobei das Hülsenstück (**56**):
ba) zumindest eine axial verlaufende Führungsnut (**565**) zur Aufnahme des Führungselements (**535**) hat; und
bb) einerseits am Stutzen (**521**) der Basis (**52**) befestigt ist und andererseits mit einem unteren Ende (**25**) der Ventilstange (**2**) verbunden ist; und
c) einem Verriegelungsstück (**57**), das axial fixiert und radial verstellbar einen Mittelabschnitt (**567**) des Hülsenstücks (**56**) ummantelt, wobei das Verriegelungsstück (**57**):
ca) zumindest eine Stellnut (**575**) hat, die zur Führungsnut (**565**) am Hülsenstück (**56**) komplementär verläuft, zur Aufnahme des Führungselements (**535**) bestimmt ist und einen Haltepunkt besitzt, der nicht kongruent zur Führungsnut (**565**) liegt und der Einstellung der Blockierung der Relativbewegung zwischen Basis (**52**) und Verschlusskörper (**53**) dient; und
cb) äusserlich eine Mitnehmerkontur (**574**) zum Ansetzen eines Werkzeugs (**7**) für die Verstellung des Verriegelungsstücks (**57**) besitzt.

10. Hydrant (**1**) nach Anspruch 9, **dadurch gekennzeichnet, dass**
a) das Führungselement (**535**) stiftartig ist, welches das freie obere Ende des Zapfens (**533**) T-förmig durchragt;
b) die Führungsnut (**565**) am Hülsenstück (**56**) und die Stellnut (**575**) mit dem Haltepunkt am Verriegelungsstück (**57**) vorzugsweise zweifach zueinander diametral angeordnet vorgesehen sind; und
c) das Führungselement (**535**) im Zusammenwirken mit der Stellnut (**575**) und deren Haltepunkt nach dem Prinzip eines Bajonettverschlusses ausgebildet sind.

11. Hydrant (**1**) nach zumindest einem der Ansprüche 1 bis 10, **dadurch gekennzeichnet, dass**
a) die Entwässerungsöffnung (**67**) und der Ventilsitz (**4**) des Hydranten (**1**) im Steigrohr (**11**) vorgesehen sind; und
b) die Verbindung vom Steigrohr (**11**) zum Wasserleitungsnetz (**13**) direkt oder indirekt mit einem dazwischen installierten Einlaufrohr (**12**) hergestellt ist.

12. Hydrant (**1**) nach zumindest einem der Ansprüche 1 bis 10, **dadurch gekennzeichnet, dass**
a) die Entwässerungsöffnung (**67**) des Hydranten (**1**) am Übergang vom Steigrohr (**11**) zu einem Einlaufrohr (**12**), der zum Wasserleitungsnetz (**13**) führt, vorgesehen ist; und
b) der Ventilsitz (**4**) im Einlaufrohr (**12**) liegt.

13. Hydrant (**1**) nach Anspruch 12, **dadurch gekennzeichnet, dass**
a) die Entwässerungsöffnung (**67**) in einem Einsatz (**6**) angeordnet ist;
b) der Einsatz (**6**) zwischen einem unteren Flansch (**111**) des Steigrohrs (**11**) und einem oberen Flansch (**120**) des Einlaufrohrs (**12**) montiert ist; und
c) die Entwässerungsöffnung (**67**) zwischen unterem Flansch (**111**) und oberem Flansch (**120**) nach aussen mündet.

## Claims

1. Hydrant (**1**) having a main valve (**5**) which is intended for installation in a water supply network (**13**), having:
a) a connector (**108,28**) which serves for the removal of water;
b) a riser pipe (**11**) and an actuable valve rod (**2**) which extends therein, is connected to the main valve (**5**), and by means of which the main valve (**5**) can be adjusted between a closed position and an open position which is necessitated for the removal of water;
c) a valve seat (**4**) and a closure body (**53**) which is intended to interact with the valve seat (**4**) and is a constituent part of the main valve (**5**); and
d) a draining opening (**67**) which is provided for automatic emptying of the water which remained in the hydrant (**1**) in the case of non-use of the hydrant (**1**);
e) the main valve (**5**) having means (**51-53**) for preventing the introduction of medium through the valve seat (**4**) into the water supply network (**13**) via the hydrant (**1**) in the case of an open position of the main valve (**5**) for the removal of water and in the case of an absence of a throughflow from the water supply network (**13**) through the hydrant (**1**), **characterized in that** the means (**51-53**) on the main valve (**5**) comprise:
f) a base (**52**) which is connected fixedly to the valve rod (**2**); and
g) the closure body (**53**) which, facing the valve seat (**4**), is connected to the base (**52**) in a manner which is mounted on a spring (**51**):
h) the closure body (**53**) being seated with its main seal (**54**) on the valve seat (**4**) so as to seal it in the closed position of the main valve (**5**), and the base (**52**) having moved onto the closure body (**53**) counter to the force of the spring (**51**);
i) the base (**52**) having moved upwards in the open position of the main valve (**5**) and in the case of an absence of a throughflow from the water supply network (**13**) through the hydrant (**1**) out of the connector (**108,28**), and the closure body (**53**) being pressed sealingly with its main seal (**54**) onto the valve seat (**4**) by the force of the spring (**51**);
j) the base (**52**) remaining in an upwardly moved state in the open position of the main valve (**5**) and in the case of the presence of a throughflow from the water supply network (**13**) through the hydrant (**1**) out of the connector (**108,28**), and the closure body (**53**) being pressed away with its main seal (**54**) from the valve seat (**4**) counter to the force of the spring (**51**) by the pressure of the throughflow, namely by the differential pressure which occurs in the process in the flow; and
k) the base (**52**) having moved upwards in the open position of the main valve (**5**) and in the case of an attempted introduction of medium via the hydrant (**1**) into the water supply network (**13**), and the closure body (**53**) being pressed sealingly with its main seal (**54**) onto the valve seat (**4**) by the force of the spring (**51**) and by the pressure of the prevailing medium, as a result of which the introduction of medium into the water supply network (**13**) is blocked.

2. Hydrant (**1**) according to Claim 1, **characterized in that** the base (**52**) is provided with a seal element (**524**):
a) the seal element (**524**), in the open position of the main valve (**5**), being situated in a position for shutting off the draining opening (**67**) on the hydrant (**1**); and
b) the seal element (**524**), in the closed position of the main valve (**5**), being situated in a position for releasing the draining opening (**67**) on the hydrant (**1**) for automatic emptying of the water which has remained in the hydrant (**1**).

3. Hydrant (**1**) according to at least one of Claims 1 and 2, **characterized in that** there are releasable locking means on the main valve (**5**) for blocking a relative movement between the base (**52**) and the closure body (**53**) with its main seal (**54**).

4. Hydrant (**1**) according to at least one of Claims 1 to 3, **characterized in that**,
a) at the bottom, the closure body (**53**) has a plate (**530**), from which a perpendicular pin (**533**) projects centrally which protrudes displaceably into an axial passage (**522**) of the base (**52**); and
b) the spring (**51**) acts on a free upper end of the pin (**533**).

5. Hydrant (**1**) according to at least one of Claims 1 to 4, **characterized in that**
a) the spring (**51**) is accommodated in a sleeve (**50**) and is supported therein on a roof wall (**501**);
b) at the bottom, the base (**52**) has a bottom (**520**), from which a perpendicular stub (**521**) projects centrally, in which a lower end of the sleeve (**50**) and a lower end (**25**) of the valve rod (**2**) are fixed; and
c) the sleeve (**50**) extends upwards into the valve rod (**2**).

6. Hydrant (**1**) according to Claim 5, **characterized in that** the releasable locking means for blocking the relative movement between the base (**52**) and the closure body (**53**) consist of:
a) at least one pin (**538**) which projects from the plate (**530**) of the closure body (**53**) and penetrates through a passage hole (**528**) in the bottom (**520**) of the base (**52**); and
b) a securing element (**539**) which is attached releasably on a free end of the pin (**538**) and is therefore seated on a covering face of the bottom (**520**), with the result that, in the blocked state, the base (**52**) and the closure body (**53**) are pushed together counter to the force of the spring (**51**):
c) the pin (**538**), the passage hole (**528**) and the securing element (**539**) preferably being provided twofold such that they are arranged diametrically opposed with respect to one another.

7. Hydrant (**1**) according to at least one of Claims 1 to 3, **characterized in that**,
a) at the bottom, the closure body (**53**) has a plate (**530**), from which a perpendicular pin (**533**) projects centrally which protrudes displaceably into an axial passage (**522**) of the base (**52**); and
b) the spring (**51**) is arranged around the pin (**533**) and acts on the plate (**530**).

8. Hydrant (**1**) according to Claim 7, **characterized in that**,
a) at the bottom, the base (**52**) has a bottom (**520**), from which a perpendicular stub (**521**) projects centrally, to which stub (**521**) a lower end (**25**) of the valve rod (**2**) is connected; and
b) the spring (**51**) is supported on an internal annular shoulder (**523**) in the axial passage (**522**) of the stub (**521**) of the base (**52**).

9. Hydrant (**1**) according to at least one of Claims 5 and 8, **characterized in that** the releasable locking means for blocking the relative movement between the base (**52**) and the closure body (**53**) consist of:
a) a guide element (**535**) which is arranged at a free upper end of the pin (**533**);
b) a sleeve piece (**56**) with an axial passage (**562**), into which the pin (**533**) of the closure body (**53**) protrudes, the sleeve piece (**56**):
ba) having at least one axially running guide groove (**565**) for receiving the guide element (**535**); and
bb) being fastened on one side to the stub (**521**) of the base (**52**) and being connected on the other side to a lower end (**25**) of the valve rod (**2**); and
c) a locking piece (**57**) which encases a centre section (**567**) of the sleeve piece (**56**) in an axially fixed and radially adjustable manner, the locking piece (**57**) having:
ca) at least one actuating groove (**575**) which runs in a complementary manner with respect to the guide groove (**565**) on the sleeve piece (**56**), is intended to receive the guide element (**535**), and has a holding point which does not lie congruently with respect to the guide groove (**565**) and serves to adjust the blocking action of the relative movement between the base (**52**) and the closure body (**53**); and,
cb) on the outside, has a driver contour (**574**) for attaching a tool (**7**) for the adjustment of the locking piece (**57**).

10. Hydrant (**1**) according to Claim 9, **characterized in that**
a) the guide element (**535**) which penetrates the free upper end of the pin (**533**) in a T-shaped manner is peg-like;
b) the guide groove (**565**) on the sleeve piece (**56**) and the actuating groove (**575**) with the holding point on the locking piece (**57**) are preferably provided twofold such that they are arranged diametrically opposed with respect to one another; and
c) the guide element (**535**), in interaction with the actuating groove (**575**) and its holding point, is configured in accordance with the principle of a bayonet closure.

11. Hydrant (**1**) according to at least one of Claims 1 to 10, **characterized in that**
a) the draining opening (**67**) and the valve seat (**4**) of the hydrant (**1**) are provided in the riser pipe (**11**); and
b) the connection from the riser pipe (**11**) to the water supply network (**13**) is established directly or indirectly with an inlet pipe (**12**) which is installed in between.

12. Hydrant (**1**) according to at least one of Claims 1 to 10, **characterized in that**
a) the draining opening (**67**) of the hydrant (**1**) is provided at the transition from the riser pipe (**11**) to an inlet pipe (**12**) which leads to the water supply network (**13**); and
b) the valve seat (**4**) lies in the inlet pipe (**12**).

13. Hydrant (**1**) according to Claim 12, **characterized in that**
a) the draining opening (**67**) is arranged in an insert (**6**);
b) the insert (**6**) is mounted between a lower flange (**111**) of the riser pipe (**11**) and an upper flange (**120**) of the inlet pipe (**12**); and
c) the draining opening (**67**) opens to the outside between the lower flange (**111**) and the upper flange (**120**).

## Revendications

1. Prise d'eau (**1**) avec une soupape principale (**5**), qui est destinée à être installée dans un réseau de canalisations d'eau (**13**), avec:
a) un raccord (**108,28**) servant pour le prélèvement d'eau;
b) une colonne montante (**11**) et une tige de soupape actionnable (**2**) s'étendant dans celle-ci, qui est reliée à la soupape principale (**5**) et au moyen de laquelle la soupape principale (**5**) est réglable entre une position fermée et une position ouverte appropriée pour le prélèvement d'eau;
c) un siège de soupape (**4**) et un corps de fermeture (**53**), qui fait partie de la soupape principale (**5**), destiné à coopérer avec le siège de soupape (**4**);
d) un orifice de drainage (**67**), qui est prévu pour la vidange automatique de l'eau restée dans la prise d'eau (**1**) lorsque la prise d'eau (**1**) est inutilisée; dans laquelle;
e) la soupape principale (**5**) présente des moyens (**51-53**) pour empêcher l'introduction de milieu par le siège de soupape (**4**) dans le réseau de canalisations d'eau (**13**) par le biais de la prise d'eau (**1**) lors d'une position ouverte de la soupape principale (**5**) pour le prélèvement d'eau et en cas d'absence de débit venant du réseau de canalisations d'eau (**13**) à travers la prise d'eau (**1**), **caractérisée en ce que** les moyens (**51-53**) à la soupape principale (**5**) comprennent:
f) une base (**52**), qui est assemblée fixement à la tige de soupape (**2**); et
g) le corps de fermeture (**53**), qui est relié à la base (**52**) en étant tourné vers le siège de soupape (**4**) et supporté sur un ressort (**51**), dans laquelle:
h) dans la position fermée de la soupape principale (**5**), le corps de fermeture (**53**) s'applique avec son joint d'étanchéité principal (**54**) sur le siège de soupape (**4**) en le fermant de façon étanche et la base (**52**) est menée sur le corps de fermeture (**53**) contre la force du ressort (**51**);
i) dans la position ouverte de la soupape principale (**5**) et en l'absence de débit venant du réseau de canalisations d'eau (**13**) à travers la prise d'eau (**1**) hors du raccord (**108,28**), la base (**52**) est menée vers le haut et le corps de fermeture (**53**) est pressé de façon étanche avec son joint d'étanchéité principal (**54**) par la force du ressort (**51**) sur le siège de soupape (**4**);
j) dans la position ouverte de la soupape principale (**5**) et en présence d'un débit venant du réseau de canalisations d'eau (**13**) à travers la prise d'eau (**1**) hors du raccord (**108,28**), la base (**52**) menée vers le haut s'arrête et le corps de fermeture (**53**) est écarté du siège de soupape (**4**) avec son joint d'étanchéité principal (**54**) par la pression du débit contre la force du ressort (**51**), à savoir par la pression différentielle apparaissant en l'occurrence dans l'écoulement; et
k) dans la position ouverte de la soupape principale (**5**) et en cas de tentative d'introduction de milieu par le biais de la prise d'eau (**1**) dans le réseau de canalisations d'eau (**13**), la base (**52**) est menée vers le haut et le corps de fermeture (**53**) est pressé de façon étanche avec son joint d'étanchéité principal (**54**) sur le siège de soupape (**4**) par la force du ressort (**51**) et par la pression du milieu présenté, bloquant ainsi l'introduction de milieu dans le réseau de canalisations d'eau (**13**).

2. Prise d'eau (**1**) selon la revendication 1, **caractérisée en ce que** la base (**52**) est munie d'un élément d'étanchéité (**524**), dans laquelle:
a) dans la position ouverte de la soupape principale (**5**), l'élément d'étanchéité (**524**) se trouve dans une position destinée à obturer l'orifice de drainage (**67**) à la prise d'eau (**1**); et
b) dans la position fermée de la soupape principale (**5**), l'élément d'étanchéité (**524**) se trouve dans une position destinée à libérer l'orifice de drainage (**67**) à la prise d'eau (**1**) pour une vidange automatique de l'eau restée dans la prise d'eau (**1**).

3. Prise d'eau (**1**) selon au moins une des revendications 1 et 2, caractérisée en ce qu'il se trouve sur la soupape principale (**5**) des moyens d'arrêt libérables pour le blocage d'un mouvement relatif entre la base (**52**) et le corps de fermeture (**53**) avec son joint d'étanchéité principal (**54**).

4. Prise d'eau (**1**) selon au moins une des revendications 1 à 3, **caractérisée en ce que**
a) le corps de fermeture (**53**) possède dans le bas un plateau (**530**), au centre duquel s'élève un pivot vertical (**533**), qui pénètre de façon déplaçable dans un passage axial (**522**) de la base (**52**); et
b) le ressort (**51**) agit sur une extrémité supérieure libre du pivot (**533**).

5. Prise d'eau (**1**) selon au moins une des revendications 1 à 4, **caractérisée en ce que**
a) le ressort (**51**) est placé dans une gaine (**50**) et s'appuie dans celle-ci sur une paroi de toit (**501**);
b) la base (**52**) possède dans le bas un fond (**520**), au centre duquel s'élève un tuyau vertical (**521**), dans lequel une extrémité inférieure de la gaine (**50**) et une extrémité inférieure (**25**) de la tige de soupape (**2**) sont fixées; et
c) la gaine (**50**) s'étend vers le haut dans la tige de soupape (**2**).

6. Prise d'eau (**1**) selon la revendication 5, **caractérisée en ce que** les moyens d'arrêt libérables pour le blocage du mouvement relatif entre la base (**52**) et le corps de fermeture (**53**) se composent de:
a) au moins un axe (**538**) partant du plateau (**530**) du corps de fermeture (**53**), qui traverse un trou de passage (**528**) dans le fond (**520**) de la base (**52**); et
b) un élément de fixation (**539**), qui est placé de façon séparable sur une extrémité libre de l'axe (**538**) et repose ainsi sur une face de couverture du fond (**520**), de telle manière que dans l'état bloqué la base (**52**) et le corps de fermeture (**53**) soient repoussés ensemble contre la force du ressort (**51**), dans laquelle:
c) l'axe (**538**), le trou de passage (**528**) et l'élément de fixation (**539**) sont prévus de préférence de façon doublement disposée diamétralement l'un à l'autre.

7. Prise d'eau (**1**) selon au moins une des revendications 1 à 3, **caractérisée en ce que**
a) le corps de fermeture (**53**) possède dans le bas un plateau (**530**), au centre duquel s'élève un pivot vertical (**533**), qui pénètre de façon déplaçable dans un passage axial (**522**) de la base (**52**); et
b) le ressort (**51**) est disposé autour du pivot (**533**) et agit sur le plateau (**530**).

8. Prise d'eau (**1**) selon la revendication 7, **caractérisée en ce que**
a) la base (**52**) possède dans le bas un fond (**520**), au centre duquel s'élève un tuyau (**521**), auquel une extrémité inférieure (**25**) de la tige de soupape (**2**) est reliée; et
b) le ressort (**51**) s'appuie sur un épaulement annulaire interne (**523**) dans le passage axial (**522**) du tuyau (**521**) de la base (**52**).

9. Prise d'eau (**1**) selon au moins une des revendications 5 et 8, **caractérisée en ce que** les moyens d'arrêt libérables pour le blocage du mouvement relatif entre la base (**52**) et le corps de fermeture (**53**) se composent de:
a) un élément de guidage (**535**), qui est disposé à une extrémité supérieure libre du pivot (**533**);
b) une pièce de douille (**56**) avec un passage axial (**562**), dans lequel le pivot (**533**) du corps de fermeture (**53**) pénètre, dans laquelle la pièce de douille (**56**):
ba) comporte au moins une rainure de guidage axiale (**565**) destinée à recevoir l'élément de guidage (**535**); et
bb) d'une part est fixée au tuyau (**521**) de la base (**52**) et d'autre part est reliée à une extrémité inférieure (**25**) de la tige de soupape (**2**); et
c) une pièce de verrouillage (**57**), qui fixe axialement et qui enveloppe radialement de façon déplaçable une partie moyenne (**567**) de la pièce de douille (**56**), dans laquelle la pièce de verrouillage (**57**):
ca) comporte au moins une rainure de réglage (**575**), qui s'étend de façon complémentaire à la rainure de guidage (**565**) sur la pièce de douille (**56**), est destinée à recevoir l'élément de guidage (**535**) et possède un point de maintien, qui ne coïncide pas avec la rainure de guidage (**565**) et sert pour le réglage du blocage du mouvement relatif entre la base (**52**) et le corps de fermeture (**53**); et
cb) possède extérieurement un contour d'entraînement (**574**) pour le placement d'un outil (**7**) pour le déplacement de la pièce de verrouillage (**57**).

10. Prise d'eau (**1**) selon la revendication 9, **caractérisée en ce que**
a) l'élément de guidage (**535**) est en forme de tige, qui traverse en forme de T l'extrémité supérieure libre du pivot (**533**);
b) la rainure de guidage (**565**) sur la pièce de douille (**56**) et la rainure de réglage (**575**) avec le point de maintien sur la pièce de verrouillage (**57**) sont prévues de préférence de façon doublement disposée diamétralement l'une à l'autre; et
c) l'élément de guidage (**535**) est configuré pour coopérer avec la rainure de réglage (**575**) et son point de maintien selon le principe d'une fermeture à baïonnette.

11. Prise d'eau (**1**) selon au moins une des revendications 1 à 10, **caractérisée en ce que**
a) l'orifice de drainage (**67**) et le siège de soupape (**4**) de la prise d'eau (**1**) sont prévus dans la colonne montante (**11**); et
b) la connexion de la colonne montante (**11**) au réseau de canalisations d'eau (**13**) est réalisée directement ou indirectement avec un tube d'entrée (**12**) installé entre ceux-ci.

12. Prise d'eau (**1**) selon au moins une des revendications 1 à 10, **caractérisée en ce que**
a) l'orifice de drainage (**67**) de la prise d'eau (**1**) est prévu à la transition de la colonne montante (**11**) à un tube d'entrée (**12**), qui conduit au réseau de canalisations d'eau (**13**); et
b) le siège de soupape (**4**) est situé dans le tube d'entrée (**12**).

13. Prise d'eau (**1**) selon la revendication 12, **caractérisée en ce que**
a) l'orifice de drainage (**67**) est disposé dans un insert (**6**);
b) l'insert (**6**) est monté entre une bride inférieure (**111**) de la colonne montante (**11**) et une bride supérieure (**120**) du tube d'entrée (**12**); et
c) l'orifice de drainage (**67**) débouche vers l'extérieur entre la bride inférieure (**111**) et la bride supérieure (**120**).
